# EUROPEAN PATENT APPLICATION

(11) **EP 2 207 083 A1**
(43) Date of publication of application: **14.07.2010**
(21) Application number: 09162285.2
(22) Date of filing: 09.06.2009
(51) Int. Cl.: G06F 3/048, G06F 3/01

(54) **Hand-held electronic device and operating method thereof**

(30) Priority: 30.12.2008 TW 97151458
(71) Applicant: E-Ten Information Systems Co., Ltd., Taipei 114 (TW)
(72) Inventor: Fu, Wen-Chih, 114 Taipei, R.o.C. (TW)
(74) Representative: Jordan, Volker Otto Wilhelm

(57) **Abstract**

The invention discloses a hand-held electronic device and an operating method thereof. The hand-held electronic device includes a casing, a display module, a virtual keypad module, a sensing module, and a control module. The display module is disposed in the casing. The virtual keypad module is used for generating a virtual keypad capable of being displayed by the display module, wherein the whole area of the virtual keypad is larger than the area of the display module for displaying the virtual keypad. The sensing module is used for sensing an operation performed by a user on the casing or the display module to generate a sensing result. The control module is used for receiving the sensing result from the sensing module and controlling the display module to display a part of the virtual keypad according to the sensing result.

## Description

### BACKGROUND OF THE INVENTION

### 1. Field of the invention

This invention relates to a hand-held electronic device and an operating method thereof and more particularly relates to a hand-held electronic device which displays a virtual keypad on a limited-size screen and an operating method thereof.

### 2. Description of the prior art

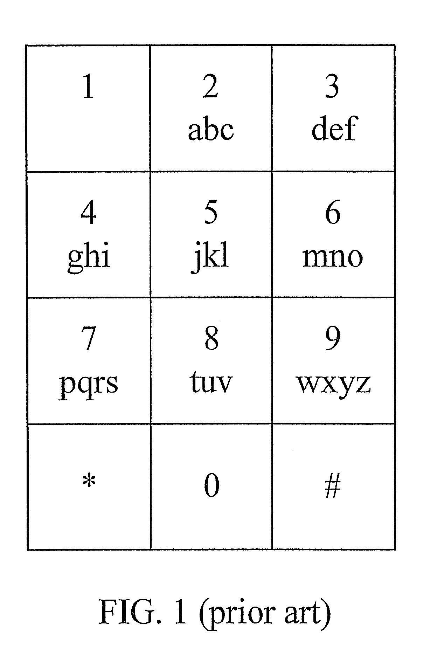

With the development of science and technology, various electronic apparatus tend to become light, thin, short, and small. A common hand-held electronic device, such as mobile phones, PDA (Personal Digital Assistant), etc., includes a keypad with a plurality of keys for a user to input characters. Please refer to FIG. 1. FIG. 1 is a schematic diagram illustrating an arrangement of keys according to a prior art. In general, limited to the volume of the hand-held electronic device, the keys of the keypad are arranged in an order of a standard telephone set, as shown in FIG. 1. When a user wants to input letters, he has to find out which keys the letters to be inputted are located first and then presses the keys found in turn to finish the input of the letters.

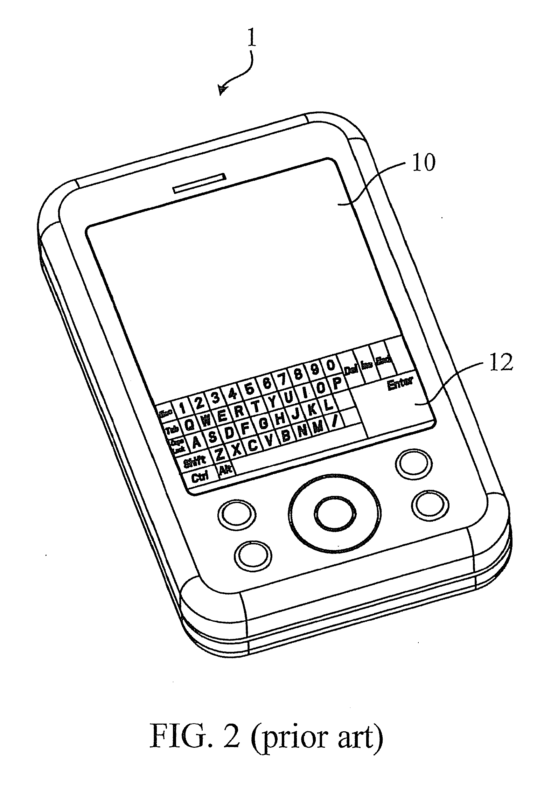

As the function of the hand-held electronic device increases day by day, the known keypad shown in FIG. 1 could not satisfy the users' needs any more. To use a QWERTY keypad on a hand-held electronic device with small volume for a user, a virtual keypad capable of being displayed on a screen therefore is developed. Please refer to FIG. 2. FIG. 2 shows a virtual keypad 12 displayed on a screen 10 of a hand-held electronic device 1. As shown in FIG. 2, the virtual keypad 12 is a QWERTY keypad. The screen 10 of the hand-held electronic device 1 includes touch sensors (not shown) for a user to directly press the virtual keypad 12 on the screen 10 to perform the input operation.

However, limited to the screen size of the screen 10, the area of each key of the virtual keypad 12 is quite small as the whole virtual keypad 12 is displayed on the screen 10. It is very easy for the user to mis-touch adjacent keys when the user inputs, which causes the disturbance of mis-input.

Accordingly, a scope of the invention is to provide a hand-held electronic device and an operating method thereof to solve the above-mentioned problems.

### SUMMARY OF THE INVENTION

A scope of the invention is to provide a hand-held electronic device. The hand-held electronic device includes a casing, a display module, a virtual keypad module, a sensing module, and a control module. The display module is disposed in the casing. The virtual keypad module is used for generating a virtual keypad capable of being displayed by the display module. The whole area of the virtual keypad is larger than the area of the display module for displaying the virtual keypad. The sensing module is used for sensing an operation performed by a user on the casing or the display module and then generating a sensing result. The control module is used for receiving the sensing result from the sensing module and, according to the sensing result, controls the display module to display a part of the virtual keypad.

In an embodiment, the sensing result generated by the sensing module represents the motion which is produced by the casing due to the action performed by the user on the casing.

In another embodiment, the sensing module is a touch sensor disposed on the display module. The action performed by the user on the display module is a drag action on the touch sensor.

Another scope of the invention is to provide an operating method of the hand-held electronic device. The operating method applies to the hardware architecture of the hand-held electronic device. The method includes the following steps: the display module displaying the virtual keypad which occupies a larger area than the area of the display module for displaying the virtual keypad; sensing an operation performed by a user on the casing or the display module to generate a sensing result; and according to the sensing result, controlling the display module to display a corresponding part of the virtual keypad.

Another scope of the invention is to provide a displaying and inputting method. The displaying and inputting method also applies to the hardware architecture of the hand-held electronic device. The displaying and inputting method includes the following steps: displaying a first part of a virtual input interface; receiving an input instruction through the first part of the virtual input interface; displaying a second part of the virtual input interface; and receiving another input instruction through the second part of the virtual input interface.

Another scope of the invention is to provide a method of displaying a virtual input interface. The method of displaying a virtual input interface also applies to the hardware architecture of the hand-held electronic device. The method includes the following steps: generating a virtual input interface which is larger than the area for displaying the virtual input interface; and according to an operation performed by a user, selectively displaying a part of the virtual input interface for the user to make an input through.

Accordingly, in an actual practice, the display module of the hand-held electronic device of the invention displays a part of the virtual input interface. If a key the user wants to use is not included in the displayed part of the virtual input interface, the user could make the casing move or take a drag motion on the display module so that the display module displays another part of the virtual input interface. Thereby, each key of the virtual input interface could be enlarged and displayed on a limited screen, which makes the operation performed by the user much easier and more precise.

The advantage and spirit of the invention may be understood by the following recitations together with the appended drawings.

### BRIEF DESCRIPTION OF THE APPENDED DRAWINGS

FIG. 1 is a schematic diagram illustrating an arrangement of keys according to a prior art.
FIG. 2 shows a virtual keypad displayed on a screen of a hand-held electronic device.
FIG. 3 is a perspective diagram of a hand-held electronic device according to an embodiment of the invention.
FIG. 4 is a function block diagram relative to the hand-held electronic device in FIG. 3.
FIG. 5 is a schematic diagram illustrating a virtual keypad according to an embodiment of the invention.
FIG. 6 is a schematic diagram illustrating a comparison of the virtual keypad in FIG. 5 and the display module in FIG. 3.
FIG. 7A is a schematic diagram illustrating a corresponding part of the virtual keypad displayed on the display module.
FIG. 7B is a schematic diagram illustrating another corresponding part of the virtual keypad displayed on the display module.
FIG. 8A and FIG. 8B are schematic diagrams illustrating that the display module displays the corresponding part of the virtual keypad according to the drag operation performed by the user with his finger.
FIG. 9 is a flow chart of an operating method applying to the hand-held electronic device of the invention.
FIG. 10 is a function block diagram relative to the hand-held electronic device according to another embodiment of the invention.
FIG. 11 is a flow chart of an operating method applying to the hand-held electronic device of the invention.
FIG. 12 is a flow chart of a displaying and inputting method according to another embodiment of the invention.

### DETAILED DESCRIPTION OF THE INVENTION

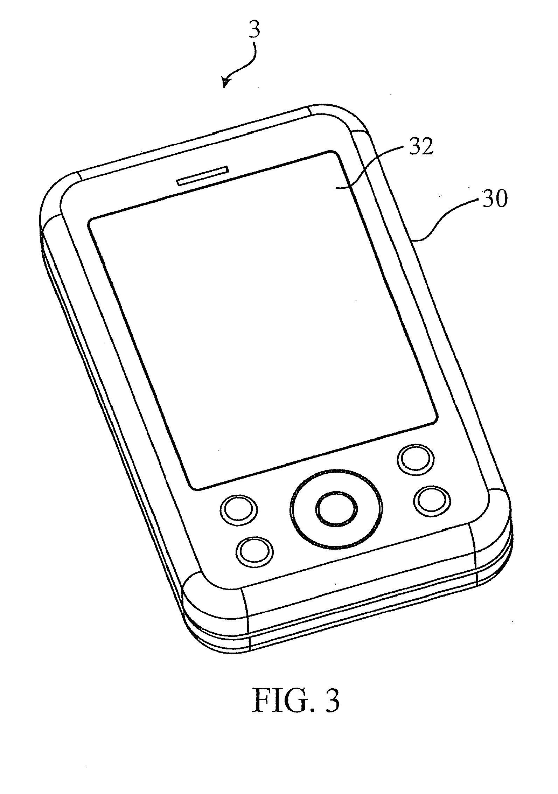

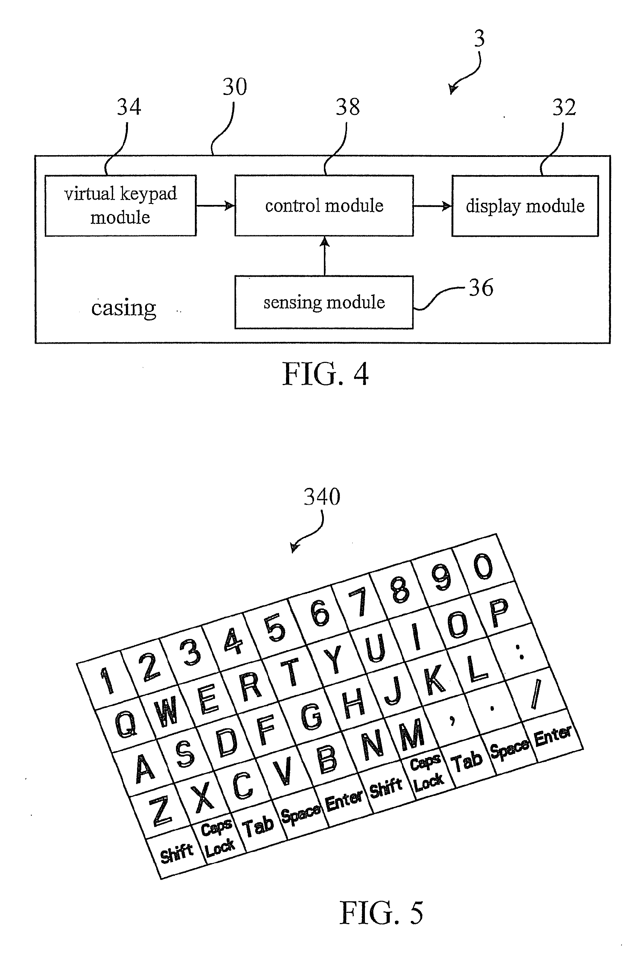

Please refer to FIG. 3 and FIG. 4. FIG. 3 is a perspective diagram of a hand-held electronic device 3 according to an embodiment of the invention. FIG. 4 is a function block diagram relative to the hand-held electronic device 3 in FIG. 3.

The hand-held electronic device 3 includes a casing 30, a display module 32, a virtual keypad module 34, a sensing module 36, and a control module 38. The display module 32, the virtual keypad module 34, the sensing module 36, and the control module 38 are disposed in the casing 30. The display module 32 is exposed out of the casing 30. The hand-held electronic device 3 could be a mobile phone or a PDA, for example. The display module 32 could be a liquid crystal display or a device with a displaying function. In an actual practice, the display module 32 includes known electronic components, such as a display panel, a backlight module, etc., for performing displaying.

It is noticed that the hand-held electronic device 3 also includes necessary software and hardware components in operation, such as CPU (Central Processing Unit), RAM (Random Access Memory), ROM (Read Only Memory), batteries for power supply, operating system, etc. The above components can be made and utilized by people in the art, so they will not be described in detail here.

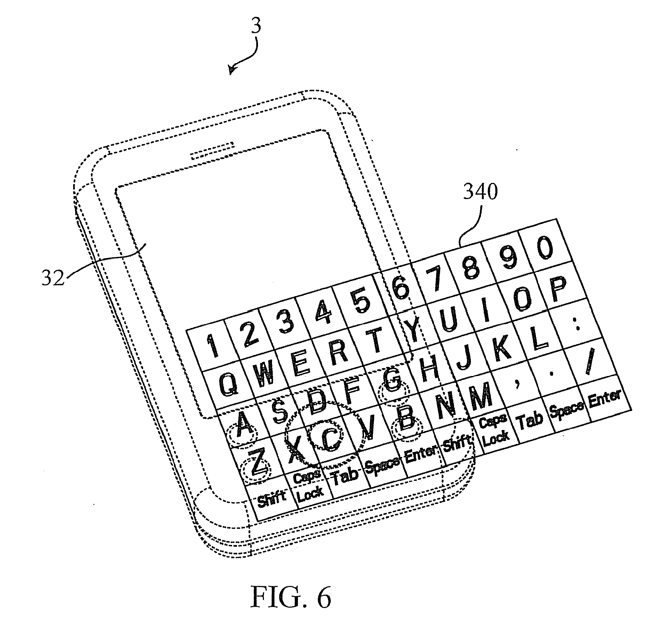

Please refer to FIG. 5 and FIG. 6. FIG. 5 is a schematic diagram illustrating a virtual keypad 340 according to an embodiment of the invention. FIG. 6 is a schematic diagram illustrating a comparison of the virtual keypad 340 in FIG. 5 and the display module 32 in FIG. 3. The virtual keypad module 34 is used for generating the virtual keypad 340 capable of being displayed by the display module 32. As shown in FIG. 6, obviously, the entire area of the virtual keypad 340 is larger than the area of the display module 32 for displaying the virtual keypad 340. In an actual practice, the virtual keypad module 34 could be realized through software, hardware or a combination thereof. For example, the virtual keypad module 34 could be embodied by programming and storing the program in a RAM or other proper storage medium. In the embodiment, the virtual keypad 340 is designed as a QWERTY keypad; however, it is not limited to that.

The sensing module 36 is used for sensing an operation of a user on the casing 30 to generate a sensing result. For example, the sensing result generated by the sensing module 36 could represent the motion which is produced by the casing 30 due to the action performed by the user on the casing 30. In the embodiment, the sensing result could represent a movement direction and/or a movement range. The movement direction includes at least one of a moving direction and a rotating direction. The movement range includes at least one of a moving distance and a rotating angle. In other words, the user could perform the following operations to make the sensing module 36 generate the sensing result: 1) shifting the casing 30, 2) rotating the casing 30, and 3) shaking the casing 30.

In actual practice, for performing the sensing of the movement direction and the movement range, the sensing module 36 could be a gyroscope, an accelerometer, a magnet sensor or other type of motion sensor. As for the working principle of the gyroscope, the accelerometer or the magnet sensor, it could be made and utilized by people in the art, which will not be described in detail here.

The control module 38 receives the sensing result from the sensing module 36 and, according to the sensing result, controls the display module 32 to display a corresponding part of the virtual keypad 340. In practice, the control module 38 could be realized through software, hardware or a combination thereof. For example, the control module 38 could be a general controller or a processor within properly designed circuit to perform the above functions; the control module 38 could also be realized by software or other proper form.

For detailed description, when the sensing result of the sensing module 36 in an embodiment represents that the casing 30 shifts rightwards by 2 cm, the control module 38 controls the virtual keypad 340 to be displayed with shifting leftwards relative to the display module 32. The leftward shifting distance of the virtual keypad 340 is proportional to the rightward shifting distance of the casing 30 in a predetermined ratio, for example, 1/2 of 2 cm is 1 cm; thereby, the corresponding part of the virtual keypad 340 displayed by the display module 32 after shifting is controlled.

And when the sensing result of the sensing module 36 represents that the casing 30 is rotated leftwards by 30 degrees, the control module 38 controls the virtual keypad 340 to be displayed with shifting leftwards relative to the display module 32. The leftward shifting distance of the virtual keypad 340 is proportional to the rotating angle of the casing 30 in a predetermined ratio, for example 1/10 of 30 degrees to be presented in cm, i.e. 3 cm; thereby, the corresponding part of the virtual keypad 340 displayed by the display module 32 after shifting is controlled as well.

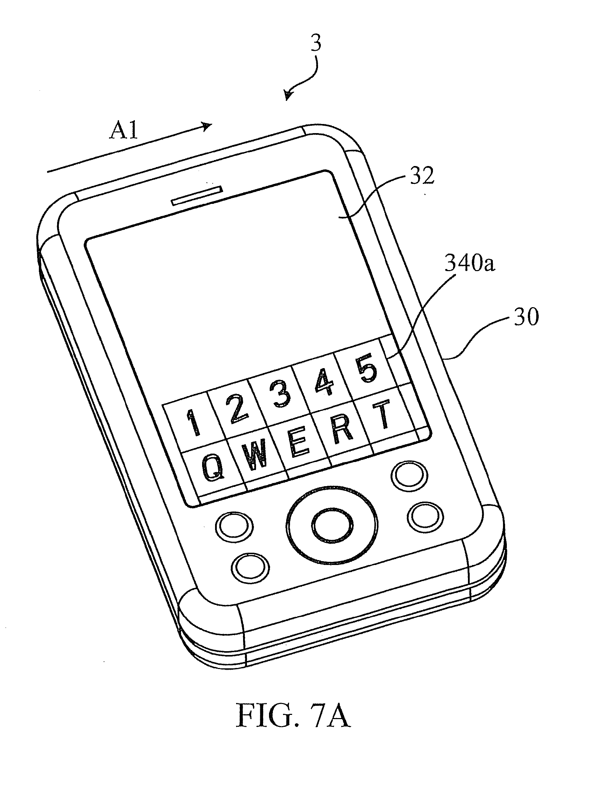

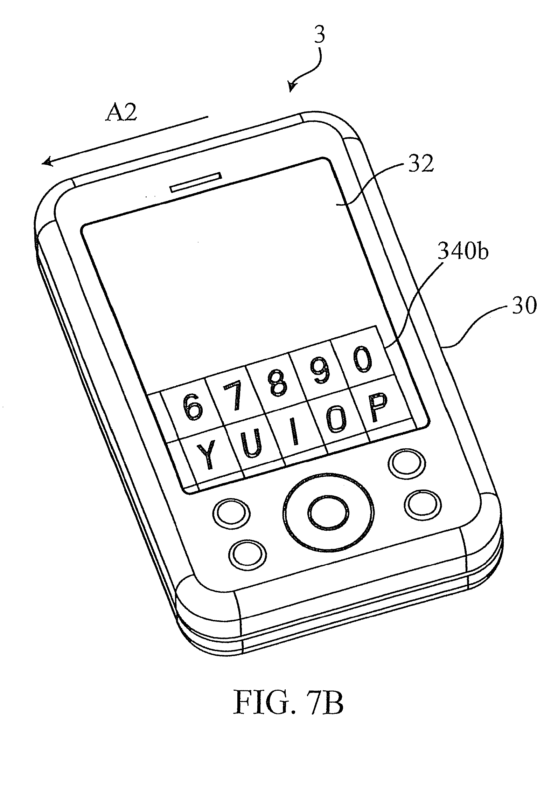

Please refer to FIG. 7A and FIG. 7B. FIG. 7A is a schematic diagram illustrating a corresponding part 340a of the virtual keypad 340 displayed on the display module 32. FIG. 7B is a schematic diagram illustrating another corresponding part 340b of the virtual keypad 340 displayed on the display module 32. As shown in FIG. 7A, when the user enables the virtual keypad function, the control module 38 controls the display module 32 to display the corresponding part 340a of the virtual keypad 340 first. When the user operates the casing 30 to shake along the direction of the arrow A1, the sensing module 36 then generates the above sensing result. The control module 38 receives the sensing result and then controls the display module 32 to display the corresponding part 340b of the virtual keypad 340 according to the sensing result, as shown in FIG. 7B. Similarly, the user could operate the casing 30 to shake along the direction of the arrow A2, so that the displayed corresponding part 340b of the virtual keypad 340 on the display module 32 is replaced with the corresponding part 340a of the virtual keypad 340.

In another embodiment, when the user makes the casing 30 shift, rotate or shake right, the control module 38 controls the virtual keypad 340 to be displayed with shifting leftwards by a proportional distance. For example, when the user makes the casing 30 shift rightwards by 0.5 cm, the control module 38 controls the virtual keypad 340 to be displayed with shifting leftwards by 0.5 cm; when the user makes the casing 30 shift rightwards by 2 cm, the control module 38 controls the virtual keypad 340 to be displayed with shifting leftwards by 2 cm. Therefore, in the embodiment, some of keys of the virtual keypad 340 could be covered by the rim of the display module 32 during the shifting process, and only some other keys of the virtual keypad 340 are displayed. If the keys the user wants to press are not displayed on the display module 32, the user has to keep the casing 30 moving.

In another embodiment, when the user makes the casing 30 shift, rotate or shake right, the control module 38 controls the virtual keypad 340 to be displayed with shifting leftwards by a distance of a whole key. Please refer to FIG. 6. When the user wants to press the key "7", the user has to make the casing 30 shift, rotate or shake rightwards twice successively so that the key "7" is displayed on the display module 32. When the user wants to press the key "B", the user has to make the casing 30 shift, rotate or shake downwards twice successively so that the key "B" is displayed on the display module 32, and so on.

Because the display module 32 could only display a corresponding part of the virtual keypad 340 each time, the displayed keys of the virtual keypad 340 could be magnified as possible as it can. The user could therefore press the desired keys easily without touching adjacent keys.

It is noticed here that the shifting/rotating direction of the casing 30 above and the corresponding moving direction of the virtual keypad 340 are just examples and are not limited to these. For example, when the user makes the casing 30 shift rightwards, the control module 38 could control the virtual keypad 340 to be displayed with shifting rightwards. In other practices, the direction could be further modified by the user based on his operation habit.

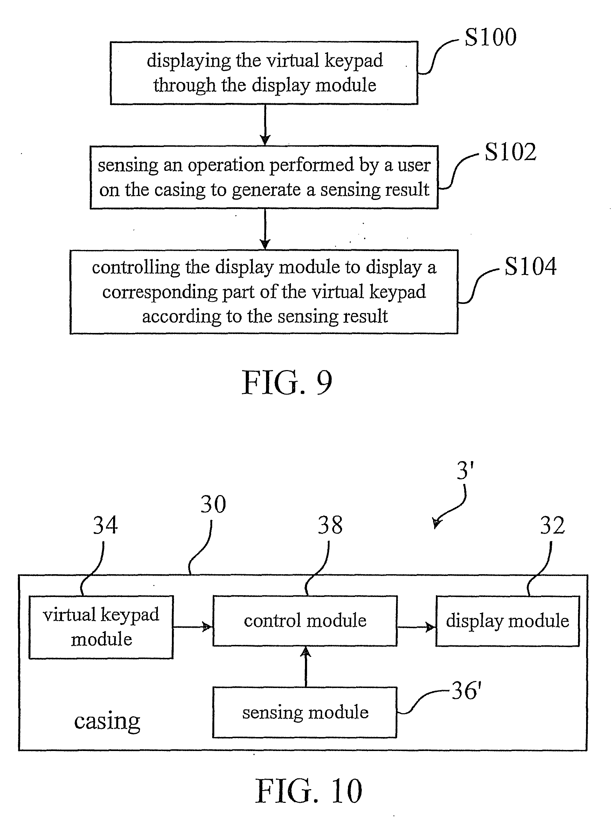

Please refer to FIG. 9. FIG. 9 is a flow chart of an operating method applying to the hand-held electronic device 3 of the invention. The operating method of the hand-held electronic device 3 includes the following steps. First, step S100 is performed. The display module 32 displays the virtual keypad 340. Therein, the whole area of the virtual keypad 340 is larger than the area of the display module 32 for displaying the virtual keypad 340. Then, step S 102 is performed. The operation by the user on the casing 30 is sensed to generate the sensing result. The operation includes a movement direction and a movement range. Afterwards, step S104 is performed. A corresponding part of the virtual keypad 340 is controlled to be displayed by the display module 32.

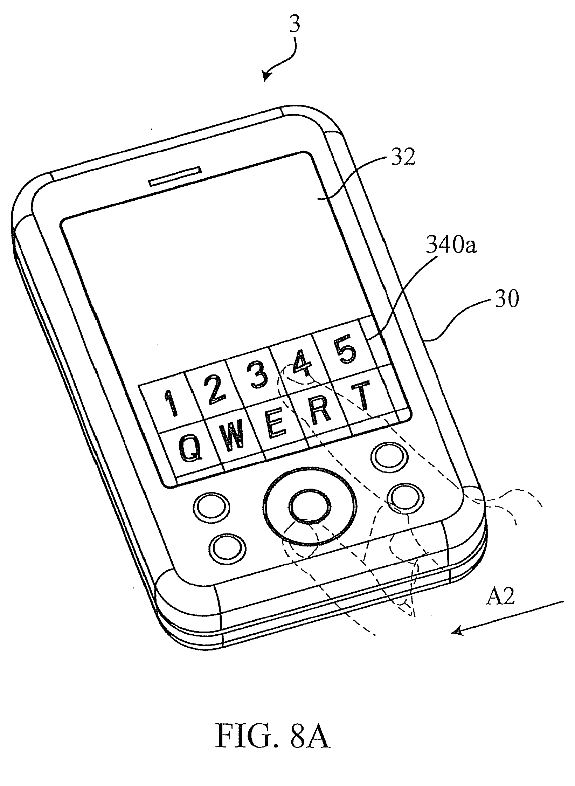

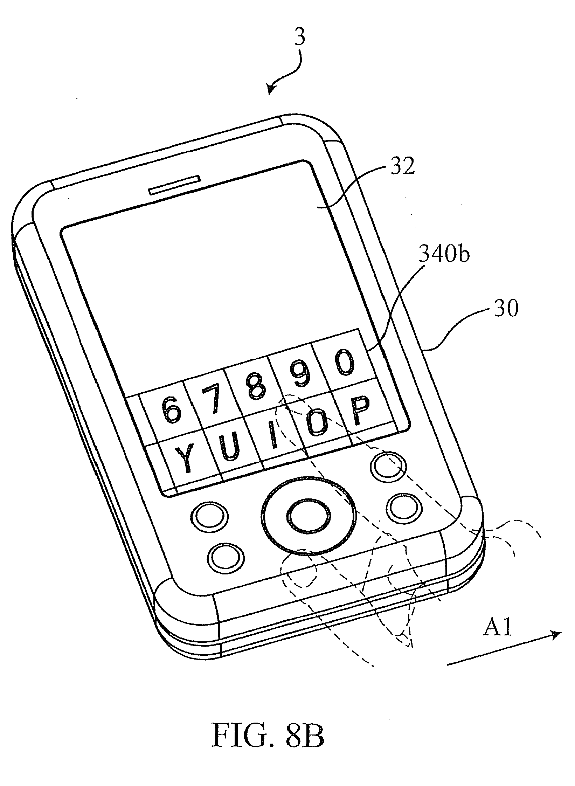

Please refer to FIG. 10. FIG. 10 is a function block diagram relative to the hand-held electronic device 3' according to another embodiment of the invention. The main difference between the hand-held electronic device 3' and the hand-held electronic device 3 is that the sensing module 36' of the hand-held electronic device 3' is the touch sensors disposed on the display module 32 and is coupled with the display module 32, i.e. to form a touch screen in common. The control module 38 could rapidly switch according to the sensing result. In practice, the user could take a drag motion on the display module 32 by a finger, a touch pen or other operable object. For example, as shown in FIG. 8A, the user touches the corresponding part 340a of the virtual keypad 340 displayed on the display module 32 through his finger and drags leftwards (i.e. the direction of the arrow A2). The sensing module 36' senses the direction and the displacement of the dragging of the finger. The control module 38 then rapidly switches the displaying of the virtual keypad 340 to be the part 340b of the virtual keypad 340, as shown in FIG. 8B; vice versa. It should be noticed that the working principle of other components of the hand-held electronic device 3' is substantially the same as that of the hand-held electronic device 3, so it will not be described more here.

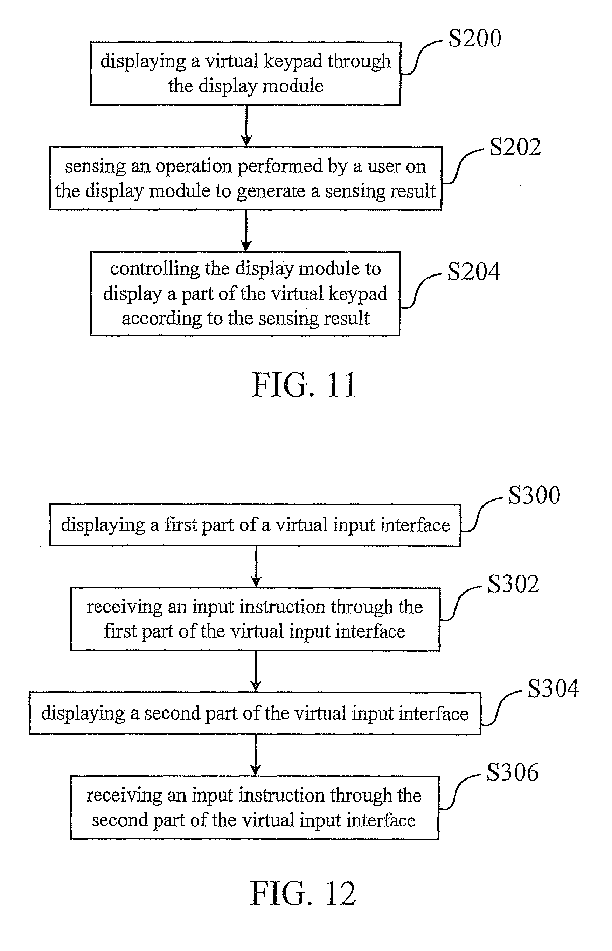

Please refer to FIG. 11. FIG. 11 is a flow chart of an operating method applying to the hand-held electronic device 3' of the invention. The operating method of the hand-held electronic device 3' includes the following steps. First, step S200 is performed. The display module 32 displays the virtual keypad 340. Therein, the whole area of the virtual keypad 340 is larger than the area of the display module 32 for displaying the virtual keypad 340. Then, step S202 is performed. An operation, e.g. a drag on the sensing module 36', of the user on the sensing module 36' is sensed to generate a sensing result. Afterwards, step S204 is performed. The display module 32 displays a corresponding part of the virtual keypad 340 according to the sensing result.

Please refer to FIG. 12. FIG. 12 is a flow chart of a displaying and inputting method according to another embodiment of the invention. The displaying and inputting method includes the following steps. First, step S300 is performed. A first part of a virtual input interface is displayed. Therein, the virtual input interface could be the virtual keypad 340 shown in FIG. 5, and the first part could be the partial virtual keypad 340a shown in FIG. 7A. Then, step S302 is performed. An input instruction through the first part of the virtual input interface is received. Therein, the input instruction is generated through that the user presses any key of the first part of the virtual input interface. Then, step S304 is performed. A second part of the virtual input interface is displayed. Therein, the second part could be the partial virtual keypad 340b shown in FIG. 7B. In practice, when the user makes the casing move or takes a drag on the display module, the displayed first part of the virtual input interface is replaced with the second part. The detailed working principle is explained as the above, and it is not described any more here. Afterwards, step S306 is performed. An input instruction through the second part of the virtual input interface is received. Therein, the input instruction is generated when the user presses any key of the second part of the virtual input interface. Certainly, except for the first part and the second part, the virtual input interface also includes a third part, a fourth part, etc. and it depends on the whole area of the virtual input interface relative to the screen area for displaying the virtual input interface.

As described above, the display module of the hand-held electronic device of the invention displays a part of the virtual input interface in advance. If the keys the user wants are not shown in the displayed part, the user could move the casing or drag on the display module so as to display another part of the virtual input interface through the display module. Thereby, each key of the virtual input interface could be significantly enlarged when displayed on a limited screen, which makes the operation performed by the user much easier and more precise.

With the example and explanations above, the features and spirits of the invention will be hopefully well described. Those skilled in the art will readily observe that numerous modifications and alterations of the device may be made while retaining the features and spirit of the invention. Accordingly, the above disclosure should be construed as limited only by the metes and bounds of the appended claims

The invention discloses a hand-held electronic device and an operating method thereof. The hand-held electronic device includes a casing, a display module, a virtual keypad module, a sensing module, and a control module. The display module is disposed in the casing. The virtual keypad module is used for generating a virtual keypad capable of being displayed by the display module, wherein the whole area of the virtual keypad is larger than the area of the display module for displaying the virtual keypad. The sensing module is used for sensing an operation performed by a user on the casing or the display module to generate a sensing result. The control module is used for receiving the sensing result from the sensing module and controlling the display module to display a part of the virtual keypad according to the sensing result.

## Claims

1. A hand-held electronic device, comprising:
a casing;
a display module, disposed in the casing;
a virtual keypad module, for generating a virtual keypad capable of being displayed by the display module, a whole area of the virtual keypad module being larger than a area of the display module for displaying the virtual keypad;
a sensing module, for sensing an operation performed by a user on the casing or the display module to generate a sensing result; and
a control module, for receiving the sensing result from the sensing module and controlling the display module to display a corresponding part of the virtual keypad according to the sensing result.

2. The hand-held electronic device of claim 1, wherein the sensing result generated by the sensing module represents a motion which is produced by the casing due to an action performed by the user on the casing.

3. The hand-held electronic device of claim 2, wherein the sensing result represents a movement direction of the casing.

4. The hand-held electronic device of claim 3, wherein the movement direction represents at least one of a moving direction and a rotating direction.

5. The hand-held electronic device of claim 1, wherein the sensing result represents a movement range of the casing.

6. The hand-held electronic device of claim 5, wherein the movement range represents at least one of a moving distance and a rotating angle.

7. The hand-held electronic device of claim 1, wherein the sensing module is a touch sensor disposed on the display module, and the operation is a drag on the touch sensor.

8. An operating method of a hand-held electronic device, the hand-held electronic device comprising a casing and a display module disposed in the casing, the operating method comprising steps of:
displaying a virtual keypad through the display module, a whole area of the virtual keypad module being larger than an area of the display module for displaying the virtual keypad;
sensing an operation performed by a user on the casing or the display module to generate a sensing result; and
controlling the display module to display a corresponding part of the virtual keypad according to the sensing result.

9. The operating method of claim 8, wherein the sensing result represents a motion which is produced by the casing due to an action performed by the user on the casing.

10. The operating method of claim 9, wherein the sensing result represents a movement direction of the casing or a movement range of the casing.

11. The operating method of claim 8, wherein the operation is a drag on the display module.

12. A method of displaying a virtual input interface on a display module disposed in a casing, comprising steps of:
generating the virtual input interface, a whole area of the virtual input interface being larger than an area of the display module for displaying the virtual input interface; and
according to an operation performed by a user, displaying a part of the virtual input interface selectively for the user to input.

13. The method of claim 12, wherein the operation is a movement of the casing or a finger drag on the display module.

14. The method of claim 12, wherein the virtual input interface is a virtual keypad.

15. The method of claim 12, wherein the operation is sensed to generate a sensing result that represents a movement direction of the casing or a movement range of the casing.
